# EUROPEAN PATENT APPLICATION

(11) **EP 4 807 798 A1**
(43) Date of publication of application: **16.09.2026**
(21) Application number: 25223967.8
(22) Date of filing: 16.12.2025
(51) Int. Cl.: H01M 4/134, H01M 4/1395, H01M 4/36, H01M 4/38, H01M 4/62, H01M 10/0525

(54) **ELECTRODE ACTIVE MATERIAL COMPOSITE PARTICLE, METHOD FOR PRODUCING THE SAME, AND BATTERY**

(30) Priority: 14.03.2025 JP 2025041561
(71) Applicant: Toyota Jidosha Kabushiki Kaisha, Toyota-shi, Aichi-ken 471-8571 (JP)
(72) Inventor: FURUYA, Ryosuke, Toyota-shi, Aichi-ken 471-8571 (JP); NOMOTO, Kazushige, Toyota-shi, Aichi-ken 471-8571 (JP); NAKAI, Takaaki, Toyota-shi, Aichi-ken 471-8571 (JP); NAKAMOTO, Hirofumi, Toyota-shi, Aichi-ken 471-8571 (JP); KUDO, So, Toyota-shi, Aichi-ken 471-8571 (JP); YOKOI, Yuma, Toyota-shi, Aichi-ken 471-8571 (JP)
(74) Representative: Cabinet Beau de Loménie

(57) **Abstract**

An electrode active material composite particle according to the present disclosure has carbon nanotubes borne on at least part of a surface of a silicon composite particle, and also content of the carbon nanotubes relative to silicon primary particles is 0.25% by mass to 10% by mass. A method according to the present disclosure for producing the electrode active material composite particles includes providing a first slurry containing silicon primary particles and a first dispersion medium, drying and removing the first dispersion medium by spray drying to prepare the silicon composite particle, providing a second slurry containing the silicon composite particle, the carbon nanotubes, and a second dispersion medium, and drying and removing the second dispersion medium by spray drying.

## Description

### 1. Field of the Invention

The present disclosure relates to an electrode active material composite particle, a method for producing the same, and a battery.

### 2. Description of Related Art

It is known that in batteries containing silicon as an electrode active material, the silicon expands and contracts during charging and discharging. Japanese Unexamined Patent Application Publication No. 2019-121557 (JP 2019-121557 A), describes technology that has been developed to mitigate the effects of such expansion and contraction by using voids in an electrode active material layer.

### SUMMARY OF THE INVENTION

Electrode active material composite particles can mitigate the effects of expansion and contraction of silicon during charging and discharging of the battery due to the voids within the composite particles. However, there is room for improvement in mitigating the effects of such expansion and contraction in the electrode active material composite particles containing silicon.

An object of the present disclosure is to provide an electrode active material composite particle that can mitigate the effects of expansion and contraction of silicon during charging and discharging of a battery, a method for producing the same, and a battery including such electrode active material composite particles.

The present disclosers have found that the above issue can be solved by the following means.

### Aspect 1

An electrode active material composite particle, including
a silicon composite particle including a plurality of silicon primary particles, and carbon nanotubes, in which
the carbon nanotubes are borne on at least part of a surface of the silicon composite particle, and
content of the carbon nanotubes relative to the silicon composite particle is 0.25% by mass to 10% by mass.

### Aspect 2

The electrode active material composite particle according to Aspect 1, in which the content of the carbon nanotubes relative to the silicon composite particle is 0.50% by mass to 8.0% by mass.

### Aspect 3

The electrode active material composite particle according to Aspect 1 or 2, further including a binder.

### Aspect 4

A battery including an electrode active material layer, in which the electrode active material layer contains the electrode active material composite particle according to any one of claims 1 to 3.

### Aspect 5

A method for producing the electrode active material composite particle according to any one of Aspects 1 to 3,
the method including
providing a first slurry containing the silicon primary particles and a first dispersion medium,
drying and removing the first dispersion medium by spray drying to prepare the silicon composite particle,
providing a second slurry containing the silicon composite particle, the carbon nanotubes, and a second dispersion medium, and
drying and removing the second dispersion medium by spray drying.

According to the present disclosure, an electrode active material composite particle that can mitigate the effects of expansion and contraction of silicon during charging and discharging of a battery, a method for producing the same, and a battery including such electrode active material composite particles, can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram illustrating an example of an electrode active material composite particle according to the present disclosure;
FIG. 2 is a schematic cross-sectional view illustrating an example of a battery according to the present disclosure; and
FIG. 3 is a graph showing a relation between carbon nanotube content relative to silicon composite particles in electrode active material composite particles of Examples and Comparative Examples, and increase in restraining pressure of the battery.

### DETAILED DESCRIPTION OF EMBODIMENTS

An embodiment of the present disclosure will be described below in detail. Note that the present disclosure is not limited to the following embodiment, and can be carried out modified variously, within the scope of the principal object of the present disclosure.

### Electrode Active Material Composite Particle

An electrode active material composite particle according to the present disclosure includes silicon composite particles containing a plurality of silicon primary particles, and carbon nanotubes. Here, carbon nanotubes are borne on at least part of the surface of the silicon composite particle, and also the content of the carbon nanotubes relative to the silicon composite particles is 0.25% by mass to 10% by mass.

As described above, silicon serving as an electrode active material expands and contracts as a battery is charged and discharged. There is known technology of converting multiple silicon primary particles into secondary particles to form silicon composite particles, as technology for suppressing the effects of such expansion and contraction. This technology enables formation of voids inside the silicon composite particles, thereby mitigating the effects of expansion and contraction of silicon.

The present disclosers have found that even when silicon composite particles obtained by converting silicon primary particles into secondary particles are used, there are cases in which the effects of expansion and contraction of silicon cannot be sufficiently mitigated. The reason for this is presumed to be as follows, without intending to be bound by any theory. That is to say, it is conceivable that during production of an electrode composite material containing silicon composite particles and/or during formation of an electrode active material layer, the silicon composite particles are deformed due to the application of intended or unintended compressive stress. It is believed that as a result, voids cannot be maintained within the silicon composite particles, and therefore the effects of expansion and contraction of silicon cannot be sufficiently mitigated.

Conversely, the present disclosers have discovered that electrode active material composite particles, in which a predetermined amount of carbon nanotubes is borne on at least part of the surface of the silicon composite particles, can mitigate the effects of expansion and contraction of silicon that accompany charging and discharging of the battery. The reason for this is presumed to be as follows, without intending to be bound by any theory.

That is to say, it is believed that in such electrode active material composite particles, new voids are formed in at least part of the surfaces thereof, due to the presence of the carbon nanotubes. It is believed that these new voids can mitigate the effects of expansion and contraction of silicon.

It is also believed that the buffering effect of the carbon nanotubes can suppress deformation of the silicon composite particles due to compressive stress. It is believed that this facilitates maintaining of voids within the silicon composite particles, thereby enabling the effects of expansion and contraction of silicon that accompany charging and discharging of the battery to be mitigated.

Furthermore, it is believed that by keeping the content of carbon nanotubes at a predetermined value or less, contact between the silicon composite particles and a solid electrolyte can be ensured. This is thought to be able to suppress uneven reaction, thereby mitigating the effects of expansion and contraction of silicon that accompany charging and discharging of the battery.

In the context of the present disclosure, "silicon composite particles" are secondary particles formed by aggregation of multiple silicon primary particles serving as an electrode active material. The silicon composite particles may be secondary particles formed by granulation of multiple silicon primary particles.

In the context of the present disclosure, "electrode active material composite particles" are particles in which carbon nanotubes are borne on at least part of the surface of silicon composite particles.

The term "electrode active material" may refer to either "cathode active material" or "anode active material", and in particular may refer to "anode active material".

The elements making up the electrode active material composite particles according to the present disclosure will each be described below.

### Silicon Primary Particles

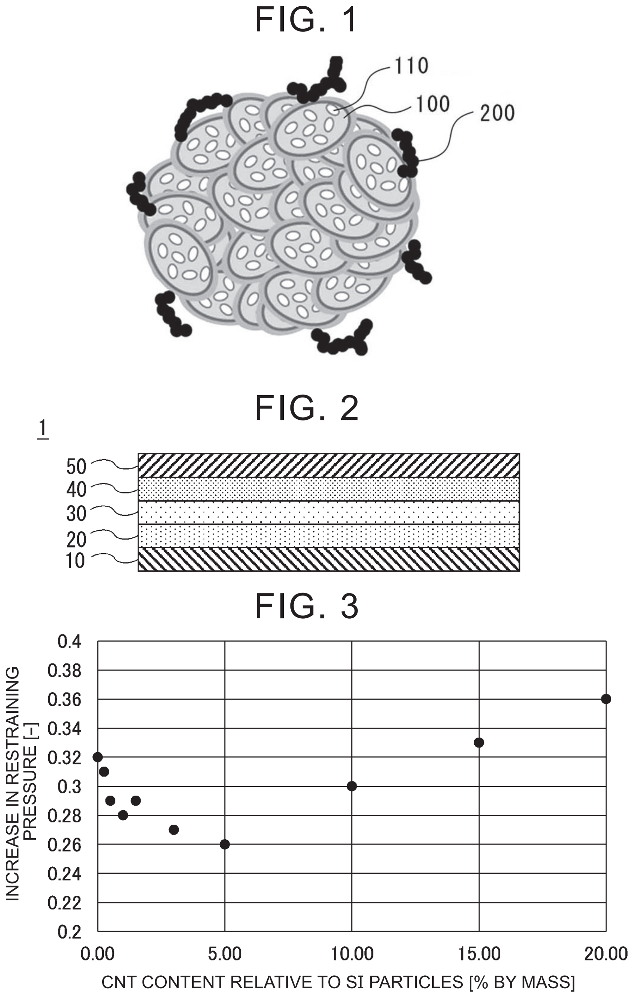

As illustrated in FIG. 1, the electrode active material composite particle according to the present disclosure includes multiple silicon primary particles 100. The silicon in the silicon primary particles 100 functions as an electrode active material, and expands and contracts as the battery is charged and discharged.

The composition of the silicon primary particles is not limited in particular. The proportion of silicon in all elements contained in the silicon primary particles may be, for example, 50 mol% or more, 70 mol% or more, 90 mol% or more, 95 mol% or more, or 99 mol% or more. The silicon primary particles may or may not contain elements other than silicon. Examples of elements other than silicon include Li, Sn, Fe, Co, Ni, Ti, Cr, B, P, and so forth. The silicon primary particles may include oxides of silicon.

The silicon primary particles may be amorphous silicon primary particles or crystalline silicon primary particles, and in particular may be crystalline silicon primary particles. The crystalline phase contained in the silicon primary particles is not limited in particularly.

As exemplified in FIG. 1, the silicon primary particles 100 may be porous silicon primary particles. That is to say, the silicon primary particles may have a plurality of pores 110. This enables mitigation of the effects of expansion and contraction of silicon, not only by voids in the electrode active material composite particles described below, but also by the pores 110 in the silicon primary particles. The pore count, pore volume, pore diameter, and so forth of the porous silicon primary particles are not limited in particular, and can be set as appropriate, taking into consideration the magnitude of expansion and contraction of silicon, and so forth. The pore diameter may be, for example, in the order of nanometers.

The particle size, shape, and so forth of the silicon primary particles are not limited in particular.

The content of the silicon primary particles in the electrode active material composite particles is not limited in particular, and can be set as appropriate, taking into consideration the desired battery capacity and the like.

The number of silicon primary particles in the electrode active material composite particles is not limited in particular.

The d50 particle size of the silicon primary particles can be measured by a laser diffraction/scattering particle size distribution analyzer. For a dispersion medium, pure water can be used. The refractive index at the time of measurement may be, for example, 3.5.

For the laser diffraction/scattering particle size distribution analyzer, Partica LA-960V2 manufactured by HORIBA, for example, can be used.

### Carbon Nanotubes

As exemplified in FIG. 1, the electrode active material composite particles according to the present disclosure include carbon nanotubes 200. Here, the carbon nanotubes 200 are borne on at least part of the surface of the silicon composite particles. This can mitigate the effects of expansion and contraction of silicon during charging and discharging of the battery.

The content of the carbon nanotubes with respect to the silicon composite particles is 0.25% by mass to 10% by mass. This can mitigate the effects of expansion and contraction of silicon during charging and discharging of the battery. Also, excessive decrease in the initial charge efficiency of the battery, which is caused by the content of silicon composite particles in the electrode active material composite particles being relatively small, can be suppressed.

The content of the carbon nanotubes relative to the silicon composite particles may be 0.40% by mass to 9.0% by mass, or 0.50% by mass to 8.0% by mass. The content of the carbon nanotubes relative to the silicon composite particles may be 0.30% by mass or more, 0.40% by mass or more, 0.50% by mass or more, 1.0% by mass or more, 1.5% by mass or more, 2.0% by mass or more, 3.0% by mass or more, 4.0% by mass or more, or 5.0% by mass or more, and may be 8.0% by mass or less, 6.0% by mass or less, 5.0% by mass or less, 4.0% by mass or less, 3.0% by mass or less, 2.0% by mass or less, 1.5% by mass or less, 1.0% by mass or less, or 0.50% by mass or less. This can effectively mitigate the effects of expansion and contraction of silicon during charging and discharging of the battery. Moreover, excessive reduction in the initial charging efficiency of the battery can be effectively suppressed.

The area proportion of the surface of the silicon composite particles on which the carbon nanotubes are borne is not limited in particular, and this area proportion depends on the content of the carbon nanotubes relative to the silicon composite particle.

The specific surface area of the carbon nanotubes may be 500 m²/g to 2000 m²/g, 1000 m²/g to 1500 m²/g, or 1200 m²/g to 1400 m²/g.

### Binder

The electrode active material composite particles according to the present disclosure may further contain a binder. The binder can bind the silicon primary particles to each other.

The binder is not limited in particular, and may be, for example, a butadiene rubber (BR)-based binder, a butylene rubber (IIR)-based binder, an acrylate butadiene rubber (ABR)-based binder, a styrene butadiene rubber (SBR)-based binder, a polyvinylidene fluoride (PVdF)-based binder, a polytetrafluoroethylene (PTFE)-based binder, a polyimide (PI)-based binder, a carboxymethyl cellulose (CMC)-based binder, a polyacrylate-based binder, a polyacrylic acid ester-based binder, and so forth, or a combination thereof.

The content of the binder in the electrode active material composite particles is not limited in particular, and can be set as appropriate, taking into consideration desired binding properties and the like.

### Voids

The electrode active material composite particles according to the present disclosure have a plurality of the voids. These voids also serve to mitigate the effects of expansion and contraction of silicon during charging and discharging of the battery.

The number of voids, porosity, void size, and so forth in the electrode active material composite particles are not limited in particular, and can be set as appropriate, taking into consideration, for example, the magnitude of expansion and contraction of silicon, and so forth.

The particle size, shape, and so forth of the electrode active material composite particles are not particularly limited.

The electrode active material composite particles according to the present disclosure can be produced by the following method.

### Production Method of Electrode Active Material Composite Particles

The method according to the present disclosure for producing electrode active material composite particles includes providing a first slurry containing silicon primary particles and a first dispersion medium, drying and removing the first dispersion medium by spray drying to prepare a silicon composite particle, providing a second slurry containing silicon composite particles, carbon nanotubes, and a second dispersion medium, and drying and removing the second dispersion medium by spray drying.

This enables the carbon nanotubes to be borne on at least part of the surface of the silicon composite particles.

### Providing First Slurry

The method according to the present disclosure includes providing the first slurry including the silicon primary particles and the first dispersion medium.

The above description can be referenced regarding the silicon primary particles.

The first dispersion medium is not limited in particular as long as it can disperse silicon primary particles.

The first slurry may further include a binder. The above description can be referenced regarding the binder.

When the first slurry contains the binder, the dispersion medium is not limited in particular, as long as it can disperse the silicon primary particles and also dissolve or disperse the binder.

Preparation of Silicon Composite Particles (removal of first dispersion medium by drying)

The method according to the present disclosure includes preparing the silicon composite particles by removing the first dispersion medium by drying, by spray drying. Thus, first preparing the silicon composite particles containing the silicon primary particles enables bearing of the carbon nanotubes on at least part of the surface of the silicon composite particles.

The drying temperature, slurry spray pressure, liquid pumping rate, and so forth, in spray drying are not limited in particular, and can be set as appropriate, taking into consideration the solid content concentration of the first slurry, and so forth.

### Providing Second Slurry

The method according to the present disclosure includes providing the second slurry including the silicon composite particles, the carbon nanotubes, and the second dispersion medium.

The above description can be referenced regarding the carbon nanotubes.

The second dispersion medium is not limited in particular as long as it can disperse silicon composite particles and can also disperse carbon nanotubes. The second dispersion medium may be the same as or different from the first dispersion medium.

The second slurry may further include a binder. The above description can be referenced regarding the binder.

When the second slurry contains the binder, the dispersion medium is not limited in particular, as long as it can disperse the silicon composite particles and also dissolve or disperse the binder.

### Drying and Removing Second Dispersion Medium

The method according to the present disclosure includes drying and removing the second dispersion medium by spray drying. Combining the silicon composite particles with the carbon nanotubes in this way enables the carbon nanotubes to be borne on at least part of the surface of the silicon composite particles.

The drying temperature, slurry spray pressure, liquid pumping rate, and so forth, in spray drying are not limited in particular, and can be set as appropriate, taking into consideration the solid content concentration of the second slurry, and so forth.

### Electrode Composite Material

The electrode composite material contains the electrode active material composite particles according to the present disclosure. The electrode composite material may optionally contain a solid electrolyte, a conductive aid, a binder, and so forth.

**In** the present disclosure, the term "electrode composite material" refers to a composition by which an electrode active material layer can be made, either by itself or in further combination with other components. Also, with respect to the present disclosure, the term "electrode composite material slurry" refers to a slurry that contains a dispersion medium in addition to the "electrode composite material" and that can be applied and dried to form an electrode active material layer.

In the context of the present disclosure, "electrode composite material" may be either "cathode composite material" or "anode composite material", and may particularly be "anode composite material".

Hereinafter, each of the elements making up the electrode composite material according to the present disclosure will be described.

### Electrode Active Material Composite Particle

The above description can be referenced with regard to the electrode active material composite particles.

The content of the electrode active material composite particles in the electrode composite material is not limited in particular, and can be set as appropriate in consideration of a desired capacity of the battery, or the like.

### Solid Electrolyte

Examples of the solid electrolyte include inorganic solid electrolytes such as a sulfide solid electrolyte, an oxide solid electrolyte, a nitride solid electrolyte, a halide solid electrolyte, or the like, and organic polymer electrolytes such as a polymer electrolyte or the like. The solid electrolyte may particularly be a sulfide solid electrolyte.

When the battery is a lithium-ion secondary battery, for example, the solid electrolyte may have lithium ion conductivity.

Examples of sulfide solid electrolytes having lithium ion conductivity include solid electrolytes containing an Li element, an X element (X is at least one type of P, As, Sb, Si, Ge, Sn, B, Al, Ga, and In), and an S element. Also, the sulfide solid electrolyte may further contain at least one of an O element and a halogen element. Examples of halogen elements include an F element, a Cl element, a Br element, and an I element.

Examples of the sulfide solid electrolyte having lithium-ion conductivity include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZmSn (where m and n are positive numerals, and Z is any of Ge, Zn, and Ga), Li₂S-GeS₂, Li₂S-SiS₂-Li₃PO₄, Li₂S-SiS₂-LiₓMO_{y} (where x and y are positive numerals, and M is any one of P, Si, Ge, B, Al, Ga, and In).

Examples of oxide solid electrolytes having lithium ion conductivity include solid electrolytes containing an Li element, a Y element (Y is at least one of Nb, B, Al, Si, P, Ti, Zr, Mo, W, and S), and an O element. Specific examples include garnet solid electrolytes such as Li₇La₃Zr₂O₁₂, Li₇₋ₓLa₃(Zr₂₋ₓNbₓ)O₁₂ (0 ≤ x ≤ 2), Li₅La₃Nb₂O₁₂, and so forth; perovskite solid electrolytes such as (Li, La)TiO₃, (Li, La)NbO₃, (Li, Sr)(Ta, Zr)O₃, and so forth; NASICON solid electrolytes of Li(Al, Ti)(PO₄)₃ and Li(Al, Ga)(PO₄)₃; Li-P-O-based solid electrolytes such as Li₃PO₄, LIPON (compound in which part of O of Li₃PO₄ is substituted with N), and so forth; and Li-B-O-based solid electrolytes such as Li₃BO₃, a compound in which part of O of Li₃BO₃ is substituted with C, and so forth.

The content of the solid electrolyte in the electrode composite material is not limited in particular, and can be set as appropriate in consideration of desired ion conductivity, and so forth.

### Conductive Aid

The conductive aid may be, for example, a carbon material, metal particles, or a combination thereof. The carbon material may be, for example, a non-fibrous carbon material such as acetylene black (AB), Ketjen black (KB), or the like; a fibrous carbon material such as vapor grown carbon fiber (VGCF), carbon nanotubes (CNT), and carbon nanofibers (CNF), or a combination thereof. The metal particles may be, for example, nickel, copper, iron, stainless steel, or a combination thereof.

The content of the conductive aid in the electrode composite material is not limited in particular and can be set as appropriate taking into consideration the desired conductivity and the like.

### Binder

The binder may be, for example, a rubber-based binder such as butadiene rubber, hydrogenated butadiene rubber, styrene butadiene rubber (SBR), hydrogenated styrene butadiene rubber, nitrile butadiene rubber, hydrogenated nitrile butadiene rubber, acrylate butadiene rubber (ABR), ethylene propylene rubber, or the like; a fluoride-based binder such as polyvinylidene difluoride (PVdF), polyvinylidene difluoride-polyhexafluoropropylene copolymer (PVdF-HFP), polytetrafluoroethylene, fluororubber, or the like; a polyolefin-based thermoplastic resin such as polyethylene, polypropylene, polystyrene, or the like; an imide-based resin such as polyimide, polyamideimide, or the like; an amide-based resin such as polyamide or the like; an acrylic-based resin such as polymethyl acrylate, polyethyl acrylate, or the like; a methacrylic-based resin such as polymethyl methacrylate, polyethyl methacrylate, or the like; or a combination thereof.

The content of the binder in the electrode composite material is not limited in particular, and can be set as appropriate in consideration of desired binding properties and the like.

### Other Components

The electrode composite material may contain or may not contain further components other than those described above.

### Battery

A battery according to the present disclosure has the electrode active material layer, and also the electrode active material layer contains the electrode active material composite particles according to the present disclosure. As exemplified in FIG. 2, a battery 1 according to the present disclosure may have an anode current collector layer 10, an anode active material layer 20, an electrolyte layer 30, a cathode active material layer 40, and a cathode current collector layer 50, in this order. In the battery according to the present disclosure, the anode active material layer 20 in particular may contain the electrode composite material according to the present disclosure.

The battery according to the present disclosure may be a liquid battery or a solid-state battery, and in particular may be a solid-state battery. The solid-state battery may include a combination of a solid electrolyte and a liquid electrolyte, as the electrolyte. Also, a solid-state battery may also be an all-solid-state battery, i.e., a battery containing just a solid electrolyte as the electrolyte.

The battery according to the present disclosure may be a secondary battery, and in particular may be a lithium-ion secondary battery.

The battery according to the present disclosure may be restrained by restraining members such as end plates or the like, from both sides in a laminating direction of the above-described layers. An example of a restraining method is a method that utilizes restraining torque of bolts, or the like, but is not limited thereto.

Each of the elements making up the battery according to the present disclosure will be described below. The following exemplarily describes below a case in which the battery according to the present disclosure is an all-solid-state battery and also the electrode active material layer containing the electrode composite material according to the present disclosure is an anode active material layer.

### Anode Current Collector Layer

The anode current collector layer may be in the form of a foil, plate, mesh, punched metal, foam, and so forth. The anode current collector layer may be a metal foil or a metal mesh, or may be a carbon sheet, and may particularly be a metal foil. The anode current collector layer may be made of a plurality of sheets of foil, sheets, or the like.

Metal making up the anode current collector layer is not limited in particular, and may be, for example, copper, nickel, chromium, gold, platinum, silver, aluminum, iron, titanium, zinc, cobalt, stainless steel, or the like. In particular, the anode current collector layer may contain at least one type of metal selected from among copper, nickel, and stainless steel.

For the purpose of adjusting resistance or the like, some sort of coating layer may be formed on the surface of the anode current collector layer. Also, the anode current collector layer may be formed by plating or vapor deposition of any of the above metals onto a metal foil or a substrate. Also, when made of a plurality of sheets of metal foil, the anode current collector layer may further include some sort of layer interposed between these metal foils.

The thickness of the anode current collector layer is not limited in particular, and may be, for example, 0.1 µm or more, or 1 µm or more, and may be 1 mm or less, or 100 µm or less.

### Anode Active Material Layer

The anode active material layer contains the electrode composite material according to the present disclosure. The above description can be referenced regarding the electrode composite material according to the present disclosure. The anode active material layer may be formed by forming the electrode composite material according to the present disclosure, itself, into a layer.

The thickness of the anode active material layer is not limited in particular, and may be, for example, 0.1 µm or more and 1000 µm or less.

### Solid Electrolyte Layer

The solid electrolyte layer contains at least solid electrolyte particles, and may optionally further contain a binder and so forth.

The above description can be referenced regarding the solid electrolyte particles and the binder.

The thickness of the solid electrolyte layer is not limited in particular, and may be, for example, 0.1 µm or more and 1000 µm or less.

### Cathode Active Material Layer

The cathode active material layer contains at least a cathode active material, and may optionally further contain a solid electrolyte, a conductive aid, a binder, and so forth.

The cathode active material is not limited in particular, and may be, for example, an oxide active material. The oxide active material used in a lithium-ion battery may be, for example, LiCoO₂, LiMnO₂, Li₂NiMn₃O₈, LiVO₂, LiCrO₂, LiFePO₄, LiCoPO₄, LiNiO₂, LiN_{1/3}Co_{1/3}Mn_{1/3}O₂, or the like. Also, a coating layer containing a Li-ion conductive oxide, such as for example, LiNbO₃ or the like, may be formed on the surface of these active materials.

The content of the cathode active material in the cathode active material layer is not limited in particular.

The above description can be referenced regarding the solid electrolyte, the conductive aid, and the binder.

The thickness of the cathode active material layer is not limited in particular, and may be, for example, 0.1 µm or more and 1000 µm or less.

### Cathode Current Collector Layer

The cathode current collector layer may be in the form of a foil, plate, mesh, punched metal, foam, and so forth. The cathode current collector layer may be a metal foil or a metal mesh, and in particular may be a metal foil. The cathode current collector layer may be made of a plurality of sheets of foil.

The metal making up the cathode current collector layer may be copper, nickel, chromium, gold, platinum, silver, aluminum, iron, titanium, zinc, cobalt, stainless steel, or the like, and the cathode current collector layer may, in particular, contain aluminum.

For the purpose of adjusting the resistance or the like, some sort of coating layer may be formed on the surface of the cathode current collector layer. Also, the cathode current collector layer may also be formed by plating or vapor deposition of any of the above metals onto a metal foil or a substrate. Also, when made of multiple metal foils, the cathode current collector layer may include some sort of layer interposed between these metal foils.

The thickness of the cathode current collector layer is not limited in particular, and may be, for example, 0.1 µm or more, or 1 µm or more, and may be 1 mm or less, or 100 µm or less.

### Other Configurations

The battery may be a battery in which the above configurations are accommodated inside an outer encasement. Any known outer encasement for a battery can be employed as the outer encasement. Also, a plurality of batteries may be electrically connected in any manner and stacked in any manner to form a battery pack. In this case, this battery pack may be accommodated inside a known battery case. The battery may also include other obvious components, such as necessary terminals and so forth. The shape of the battery may be, for example, a coin shape, a laminate (pouch) shape, a cylindrical shape, a rectangular shape, or the like.

The method for manufacturing the battery according to the present disclosure is not limited in particular, and includes, for example, forming an anode active material layer containing the electrode composite material according to the present disclosure.

An example of the method for forming the anode active material layer containing the electrode composite material is a method in which constituent materials such as the electrode active material composite particles or the like are mixed to obtain an electrode composite material, and the electrode composite material that is obtained, is then molded by dry molding or wet molding.

The method for manufacturing the battery according to the present disclosure may further include laminating an anode current collector layer, an anode active material layer, a solid electrolyte layer, a cathode active material layer, and a cathode current collector layer, in this order, to form an electrode laminate.

Other members, such as terminals or the like, are attached to the electrode laminate as necessary. The electrode laminate is accommodated in a battery case and sealed, thereby obtaining a battery.

### Example 1

### Preparation of Electrode Active Material Composite Particles

### Providing First Slurry

A solution was obtained by dissolving or dispersing a binder in an organic solvent serving as a first dispersion medium, and porous silicon (Si) primary particles, prepared by a conventional method, were added to this solution, thereby obtaining a slurry.

### Preparation of Silicon Composite Particles

The organic solvent used as the first dispersion medium in the first slurry was dried and removed by spray drying to prepare silicon composite particles.

### Providing Second Slurry

A second slurry was prepared by dispersing the silicon composite particles and 0.25% by mass of carbon nanotubes (CNTs, specific surface area of 1300m²/g) relative to the Si composite particles in a solution prepared by dissolving or dispersing a binder in an organic solvent serving as a second dispersion medium.

### Drying and Removing Second Dispersion Medium

The organic solvent as the second dispersion medium in the second slurry was dried and removed by spray drying to prepare electrode active material composite particles.

### Formation of Anode Active Material Layer

The electrode active material composite particles that were obtained, a binder, a conductive aid, and a solid electrolyte, were added to an organic solvent to prepare a mixed solution. This mixed solution was kneaded using an ultrasonic homogenizer to obtain an anode composite material slurry. The anode composite material slurry that was obtained was applied to a nickel foil serving as an anode current collector layer to form an anode active material layer. As a result, an anode laminate in which the anode current collector layer and the anode active material layer were laminated, was obtained, and this was formed into a strip shape.

### Formation of Solid Electrolyte Layer

A binder and a solid electrolyte were added to an organic solvent to prepare a mixed solution. This mixed solution was kneaded using an ultrasonic homogenizer to obtain a solid electrolyte composite material slurry. The solid electrolyte composite material slurry that was obtained was applied to an aluminum (Al) foil as a release sheet to form a solid electrolyte layer. A total of three solid electrolyte layers were formed in the same manner and were formed into strip shapes.

### Formation of Cathode Active Material Layer

A binder, a conductive aid, a solid electrolyte, and LiNi_{0.8}Co_{0.15}Mn_{0.05}O₂ as a cathode active material, were added to an organic solvent, so as to prepare a mixed solution. This mixed solution was kneaded using an ultrasonic homogenizer to obtain a cathode composite material slurry. The cathode composite material slurry that was obtained was applied to an Al foil as a cathode current collector layer to form a cathode active material layer. Thus, a cathode laminate in which the cathode current collector layer and the cathode active material layer were laminated, was obtained, and this was formed into a strip shape.

### Fabrication of Battery

The anode laminate and the second solid electrolyte layer were laminated together with the anode active material layer and the solid electrolyte layer facing each other, and then roll pressed at 25 °C and a pressure of 50 kN/cm. Al foil serving as a release sheet was peeled off from the solid electrolyte layer, thereby transferring the solid electrolyte layer onto the anode active material layer.

The cathode laminate and the first solid electrolyte layer were laminated together with the cathode active material layer and the solid electrolyte layer facing each other, and then roll pressed at 165 °C and a pressure of 50 kN/cm. Al foil serving as a release sheet was peeled off from the solid electrolyte layer, thereby transferring the solid electrolyte layer onto the cathode active material layer.

The anode laminate to which the solid electrolyte layer was transferred and the cathode laminate to which the solid electrolyte layer was transferred were punched out using punching machines with a diameter of 13.00 mm and a diameter of 11.28 mm, respectively.

A third solid electrolyte layer was punched out to a predetermined size using a uniaxial press and further transferred onto the second solid electrolyte layer laminated on the anode active material layer. The anode laminate and the cathode laminate were laminated such that the solid electrolyte layer on the anode active material layer and the solid electrolyte layer on the cathode active material layer faced each other.

Current extraction tabs were attached to the cathode active material layer and the anode active material layer, and the layers were sealed in an Al laminate using a vacuum laminate sealer and restrained at a pressure of 5 MPa to fabricate an all-solid-state battery.

### Examples 2 to 7 and Comparative Examples 1 to 3

The electrode active material composite particles of Examples 2 to 7 and Comparative Examples 1 to 3 were obtained in the same manner as in Example 1, except that the content of CNT relative to the Si composite particles (CNT/Si composite particles) was changed as shown in Table 1.

### Evaluation

### Increase in Restraining Pressure

The all-solid-state battery that was obtained was charged from an uncharged state to 4.05 V, and the increase in restraining pressure at the time of charging was measured using a load cell. The results are shown in Table 1 and FIG. 3. Values shown in Table 1 and FIG. 3 are measured values at the point in time when the Si charge amount was 1000 mAh, normalized by the capacity of the all-solid-state battery. The increase in restraining pressure means the amount of expansion of the electrode active material composite particles. It should be noted that "CNT/Si composite particles" in Table 1 and "amount of CNT relative to Si particles" in FIG. 3 are synonymous.

### Initial Charge Efficiency

The charging efficiency was calculated when measuring the increase in restraining pressure. Results are shown in Table 1. The values shown in Table 1 are relative values with the value of Comparative Example 1 taken as 100.

**Table 1**

| | CNT/Si composite particles [% by mass] | Increase in Restraining Pressure [MPa/mAh] | Initial Charge Efficiency [-] |
|---|---|---|---|
| Comparative Example 1 | 0.00 | 0.32 | 100 |
| Example 1 | 0.25 | 0.31 | 99.6 |
| Example 2 | 0.50 | 0.29 | 99.3 |
| Example 3 | 1.0 | 0.28 | 98.6 |
| Example 4 | 1.5 | 0.29 | 97.8 |
| Example 5 | 3.0 | 0.27 | 95.6 |
| Example 6 | 5.0 | 0.26 | 89.7 |
| Example 7 | 10 | 0.30 | 76.9 |
| Comparative Example 2 | 15 | 0.33 | 60.9 |
| Comparative Example 3 | 20 | 0.36 | 40.0 |

As shown in Table 1, when the value of the CNT/Si composite particles was within the range of the present disclosure, the increase in restraining pressure was small. In particular, when this value was 0.50% by mass to 8.0% by mass, the increase in the restraining pressure was particularly small and further, no excessive decrease in the initial charging efficiency occurred.

## Claims

1. An electrode active material composite particle, comprising:
a silicon composite particle including a plurality of silicon primary particles (100), and
carbon nanotubes (200), wherein
the carbon nanotubes are borne on at least part of a surface of the silicon composite particle, and
content of the carbon nanotubes relative to the silicon composite particle is 0.25% by mass to 10% by mass.

2. The electrode active material composite particle according to claim 1, wherein the content of the carbon nanotubes (200) relative to the silicon composite particle is 0.50% by mass to 8.0% by mass.

3. The electrode active material composite particle according to claim 1, further comprising a binder.

4. A battery comprising an electrode active material layer, wherein the electrode active material layer contains the electrode active material composite particle according to any one of claims 1 to 3.

5. A method for producing the electrode active material composite particle according to any one of claims 1 to 3,
the method comprising:
providing a first slurry containing the silicon primary particles (100) and a first dispersion medium;
drying and removing the first dispersion medium by spray drying to prepare the silicon composite particle;
providing a second slurry containing the silicon composite particle, the carbon nanotubes, and a second dispersion medium; and
drying and removing the second dispersion medium by spray drying.
